(19) Europäisches Patentamt
European Patent Office
Office européen des brevets

(11) **EP 3 334 206 A1**

(12) **EUROPEAN PATENT APPLICATION**
published in accordance with Art. 153(4) EPC

(43) Date of publication:
**13.06.2018 Bulletin 2018/24**

(51) Int Cl.:
**H04W 24/10** (2009.01)

(21) Application number: **16834610.4**

(86) International application number:
**PCT/CN2016/093422**

(22) Date of filing: **05.08.2016**

(87) International publication number:
**WO 2017/024986 (16.02.2017 Gazette 2017/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.08.2015 CN 201510484903**

(71) Applicant: **Sharp Kabushiki Kaisha**
**Sakai City, Osaka 590-8522 (JP)**

(72) Inventors:
• **SHEN, Xingya**
  **Shanghai 201206 (CN)**
• **LIU, Renmao**
  **Shanghai 201206 (CN)**
• **JIANG, Qi**
  **Shanghai 201206 (CN)**

(74) Representative: **Müller Hoffmann & Partner**
**Patentanwälte mbB**
**St.-Martin-Strasse 58**
**81541 München (DE)**

(54) **USER EQUIPMENT, NETWORK NODE, AND MEASUREMENT METHOD**

(57)     The present invention provides a method executed by a network node. The method comprises: transmitting ProSe resource measurement indication information to user equipment, wherein the ProSe resource measurement indication information comprises information indicating the positions of the ProSe resources in a time-frequency domain and identity information of reference signals on the ProSe resources; and transmitting ProSe resource measurement report configuration information to the user equipment. Also provided is a corresponding network node and user equipment. According to the present invention, the user equipment can measure the Sidelink resources and report a measurement result to a base station.

FIG. 1

**Description**

TECHNICAL FIELD

The present invention relates to the technical field of wireless communication. More particularly, the present invention relates to a measurement method for Device-to-Device Communication (D2D) and a corresponding network node and user equipment.

BACKGROUND

Modern wireless mobile communication systems present two significant characteristics. One is high-speed broadband, for example, the fourth generation wireless mobile communication system has a bandwidth of up to 100 MHz and a downlink speed of up to 1 Gbps. The other characteristic is mobile interconnection, which promotes emerging services, such as WAP, mobile phone video-on-demand, online navigation and the like. These two characteristics propose higher requirements for wireless mobile communication technology. Such requirements mainly include: ultrahigh-speed wireless transmission, inter-region interference suppression, mobile reliable signal transmission, distributed/centralized signal processing and the like. To satisfy the development requirements above, in a future, more enhanced Fourth Generation (4G) or Fifth Generation (5G) wireless mobile communication system, various corresponding key technologies will begin to be proposed and demonstrated, arousing the attention of researchers in the field.

In order to meet the above development needs, the 3rd Generation Partnership Project (3GPP) Organization discussed and adopted the key technology of device-to-device (D2D) communication technology as an enhanced Fourth Generation wireless mobile communication system at the 58th plenary session. D2D technology can realize local communication or peer-to-peer communication without access to the core network. The transmission method using D2D technology plays a very active role in alleviating the load of a base station and prolonging the battery life of a mobile terminal. Generally, according to whether the scenario where the user equipment implementing D2D transmission (hereinafter referred to as D2D user equipment) is located is covered by a macro base station, D2D user equipment scenarios may be divided into: under network coverage, without network coverage, and under partial network coverage, wherein the scenario of partial network coverage refers to the case including D2D user equipment under network coverage and without network coverage.

In the scenario of partial network coverage, some D2D user equipments may function as a relay to forward ProSe (Proximity-based Services) to increase network coverage. Therefore, when the D2D user equipment is in coverage of the base station, the base station provides the ProSe to it. When the D2D user equipment is in coverage of the relay, a relay provides the ProSe to it. Considering the mobility of the D2D user equipment, it is necessary to reselect access to a base station or a relay. In order to ensure the continuity of the service, when the D2D user equipment reselects access to the base station or the relay, it needs to obey the control of the base station. Therefore, the user equipment needs to measure radio resources and report a measurement result to the base station, so that the base station can make a correct judgment.

SUMMARY

According to one aspect of the present invention, the present invention provides a method executed by a network node. The method comprises: transmitting ProSe resource measurement indication information to user equipment, wherein the ProSe resource measurement indication information comprises information indicating the positions of the ProSe resources in a time-frequency domain and identity information of reference signals on the ProSe resources; and transmitting ProSe resource measurement report configuration information to the user equipment.

In an embodiment, the ProSe resource measurement report configuration information comprises an event driving criterion triggering user equipment to transmit a measurement report and content reported by the user equipment.

In an embodiment, the ProSe resource measurement report configuration information further comprises replacement indication information, which is used to indicate whether to replace PCell/PSCell in the event driving criterion with Sidelink. Herein, the Sidelink refers to an air interface between user equipment and user equipment and used for the transmission of ProSe direct communication and ProSe direct discovery.

In an embodiment, the event driving criterion comprises: triggering user equipment to transmit a measurement report when a serving Sidelink is greater than an absolute threshold.

In an embodiment, the event driving criterion comprises: triggering user equipment to transmit a measurement report when a servicing Sidelink is less than an absolute threshold.

In an embodiment, the event driving criterion comprises: triggering user equipment to transmit a measurement report when a neighbor Sidelink is greater than the offset of a serving PCell/PSCell.

In an embodiment, the event driving criterion comprises: triggering user equipment to transmit a measurement report when a neighbor Sidelink is greater than an absolute threshold.

In one embodiment, the event driving criterion comprises: triggering user equipment to transmit a measurement report when a serving PCell/PSCell is less than an absolute threshold and a neighbor Sidelink is greater than another absolute threshold.

In one embodiment, the event driving criterion comprises: triggering user equipment to transmit a measurement report when a neighbor Sidelink is greater than the offset of a SCell.

In one embodiment, the event driving criterion comprises: triggering the user equipment to transmit a measurement report when the serving Sidelink is less than the absolute threshold and the neighbor Sidelink is greater than another absolute threshold.

According to another aspect of the present invention, provided is a network node, comprising: a first transmitting unit, configured to transmit ProSe resource measurement indication information to user equipment, wherein the ProSe resource measurement indication information comprises information indicating the positions of the ProSe resources in a time-frequency domain and identity information of reference signals on the ProSe resources; and a second transmitting unit, configured to transmit ProSe resource measurement report configuration information to the user equipment.

In an embodiment, the ProSe resource measurement report configuration information comprises an event driving criterion triggering user equipment to transmit a measurement report and content reported by the user equipment.

In an embodiment, the ProSe resource measurement report configuration information further comprises replacement indication information, which is used to indicate whether to replace PCell/PSCell in the event driving criterion with Sidelink.

In an embodiment, the event driving criterion comprises: triggering user equipment to transmit a measurement report when a serving Sidelink is greater than an absolute threshold.

In an embodiment, the event driving criterion comprises: triggering user equipment to transmit a measurement report when a servicing Sidelink is less than an absolute threshold.

In an embodiment, the event driving criterion comprises: triggering user equipment to transmit a measurement report when a neighbor Sidelink is greater than the offset of a serving PCell/PSCell.

In an embodiment, the event driving criterion comprises: triggering user equipment to transmit a measurement report when a neighbor Sidelink is greater than an absolute threshold.

In one embodiment, the event driving criterion comprises: triggering user equipment to transmit a measurement report when a serving PCell/PSCell is less than an absolute threshold and a neighbor Sidelink is greater than another absolute threshold.

In one embodiment, the event driving criterion comprises: triggering user equipment to transmit a measurement report when a neighbor Sidelink is greater than the offset of a SCell.

In one embodiment, the event driving criterion comprises: triggering the user equipment to transmit a measurement report when the serving Sidelink is less than the absolute threshold and the neighbor Sidelink is greater than another absolute threshold.

According to another aspect of the present invention, provided is a method executed by user equipment. The method comprises: receiving ProSe resource measurement indication information from a network node, wherein the ProSe resource measurement indication information comprises information indicating the positions of the ProSe resources in a time-frequency domain and identity information of reference signals on the ProSe resources; and receiving ProSe resource measurement report configuration information from the network node.

In an embodiment, the ProSe resource measurement report configuration information comprises an event driving criterion triggering user equipment to transmit a measurement report and content reported by the user equipment.

In an embodiment, the ProSe resource measurement report configuration information further comprises replacement indication information, which is used to indicate whether to replace PCell/PSCell in the event driving criterion with Sidelink.

According to another aspect of the present invention, provided is user equipment, comprising: a first receiving unit, configured to receive ProSe resource measurement indication information from a network node, wherein the ProSe resource measurement indication information comprises information indicating the positions of the ProSe resources in a time-frequency domain and identity information of reference signals on the ProSe resources; and a second receiving unit, configured to receive ProSe resource measurement report configuration information from the network node.

In an embodiment, the ProSe resource measurement report configuration information comprises an event driving criterion triggering user equipment to transmit a measurement report and content reported by the user equipment.

In an embodiment, the ProSe resource measurement report configuration information further comprises replacement indication information, which is used to indicate whether to replace PCell/PSCell in the event driving criterion with Sidelink.

According to the present invention, the user equipment can measure the Sidelink resources and report a measurement result to the network node.

BRIEF DESCRIPTION OF THE DRAWINGS

The above descriptions and other features of the present invention will become more apparent from the following detailed description in conjunction with the accompanying drawings.

Fig. 1 shows a flow diagram of a ProSe resource measurement configuration indication information according to the present invention;

Fig. 2 is a schematic diagram of user equipment reporting a measurement result according to the present invention;

Fig. 3 is a flow diagram of a method executed by a network node according to the present invention;

Fig. 4 is a flow diagram of a method executed by user equipment according to the present invention;

Fig. 5 shows a block diagram of a network node according to the present invention; and

Fig. 6 is a block diagram of user equipment according to the present invention.

DESCRIPTION OF EMBODIMENTS

A radio resource measurement method applicable to D2D user equipment and a network node and D2D user equipment (UE) performing the method, provided in the present invention, will be described herein in detail with reference to the accompanying drawings and specific embodiments. It is to be noted that the present invention shall not be limited to the embodiments described below. In addition, for simplicity, a detailed description of the known art not directly related to the present invention is omitted to prevent confusion with the understanding of the present invention.

In the following description, an LTE mobile communication system and its subsequent evolved releases are used as exemplary application environments to set forth embodiments of the present invention in detail. It is to be noted, however, that the present invention is not limited to the following embodiments and may be applicable to other wireless communication systems, such as a future 5G cellular communication system. In the following, unless otherwise indicated, the communication systems, network nodes and user equipment mentioned refer to communication systems, network nodes and user equipment that support D2D.

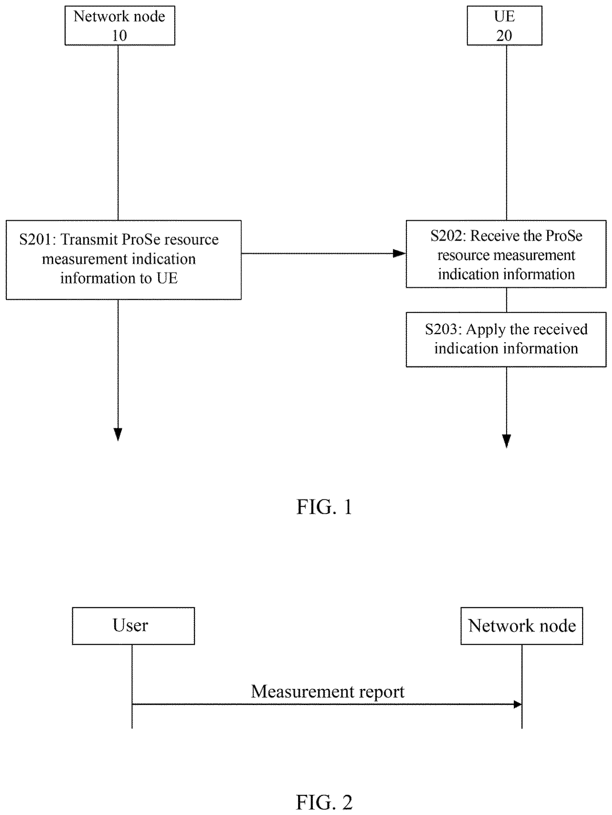

In the present invention, D2D user equipment measures a demodulation reference signal of a network node, and reports a measurement result to the network node (for example, a base station) when a certain condition is satisfied. As shown in Fig. 1, firstly, the network node 10 configures ProSe resource measurement indication information to the user equipment UE 20 (S201). The UE 20 receives the ProSe resource measurement indication information (S202) and measures the RSRP value or the RSRQ value of a reference signal on a corresponding time-frequency resource (S203). In addition, when the event driving criterion is satisfied, the UE 20 may also be triggered to report the measurement value (not shown in Fig. 1, which is described in detail below).

Similar to the radio resource measurement configuration of cellular user equipment, in this application, the ProSe radio resource measurement configuration of the user equipment comprises a measurement object, a report configuration, a measurement identifier, a quantity configuration, and a measurement gap, and the like. Herein, the measurement object (ProSe radio resource) is an uplink resource pool configured by an LTE network for the ProSe. The position of the resource pool in the time-frequency domain is indicated to the user equipment by the cell sl-CommResourcePool. The characteristics of the resource pool, such as measSidelink-Id, synchronizing signal identity (SLSSID), the physical identity (physCellId) of a cell to which the resouce pool belongs, and scramblingIdentity of a reference signal for measurement on the resource pool, are all configured to the user equipment by signaling MeasSidelink-Config. The structure of the signaling cell MeasSidelink-Config is as follows.

```
-- ASN1START

MeasSidelink-Config-r12 ::= CHOICE {
    release                 NULL,
    setup                   SEQUENCE {
        measSidelink-ToRemoveList-r13    MeasSidelink-ToRemoveList-r13    OPTIONAL,    -- Need
ON
        measSidelink-ToAddModList-r13    MeasSidelink-ToAddModList-r13    OPTIONAL,    -- NeedON
    }
}

MeasSidelink-ToRemoveList-r13 ::=    SEQUENCE (SIZE (1..maxSidelink-Meas-r13)) OF
MeasSidelink-Id-r13

MeasSidelink-ToAddModList-r13 ::=    SEQUENCE (SIZE (1..maxSidelink-Meas-r13)) OF
MeasSidelink-Config-r13

MeasSidelink-Id-r13 ::=        INTEGER (1..maxSidelink-Meas-r13)

MeasSidelink-Config-r13 ::=        SEQUENCE {
    measSidelink-Id-r13             MeasSidelink-Id-r13,
    SLSSID-r12 ::=                  INTEGER (0..167)
    physCellId-r13                  INTEGER (0..503),
    scramblingIdentity-r13          INTEGER (0..503),
    sl-CommResourcePool-r13         SL-CommResourcePool-r12
    ...
}

-- ASN1STOP
```

Wherein the structure of signaling *SL-CommResourcePool* is as follows:

```
SL-CommResourcePool-r12 ::=    SEQUENCE{
    sc-CP-Len-r12                       SL-CP-Len-r12,
    sc-Period-r12                       SL-PeriodComm-r12,
    sc-TF-ResourceConfig-r12            SL-TF-ResourceConfig-r12,
    data-CP-Len-r12                     SL-CP-Len-r12,
    dataHoppingConfig-r12               SL-HoppingConfigComm-r12,
    ue-SelectedResourceConfig-r12           SEQUENCE {
        data-TF-ResourceConfig-r12          SL-TF-ResourceConfig-r12,
        trpt-Subset-r12                     SL-TRPT-Subset-r12  OPTIONAL    -- Need OP
    }                                                           OPTIONAL,   -- Need OR
    rxParametersNCell-r12               SEQUENCE {
        tdd-Config-r12                      TDD-Config          OPTIONAL,   -- Need OP
        syncConfigIndex-r12             INTEGER (0..15)
    }                                                           OPTIONAL,   -- Need OR
    txParameters-r12                    SEQUENCE {
        sc-TxParameters-r12                 SL-TxParameters-r12,
        dataTxParameters-r12                SL-TxParameters-r12
    }                                                           OPTIONAL,   -- Cond Tx
    ...
}

SL-TRPT-Subset-r12::=               BIT STRING (SIZE (3..5))
```

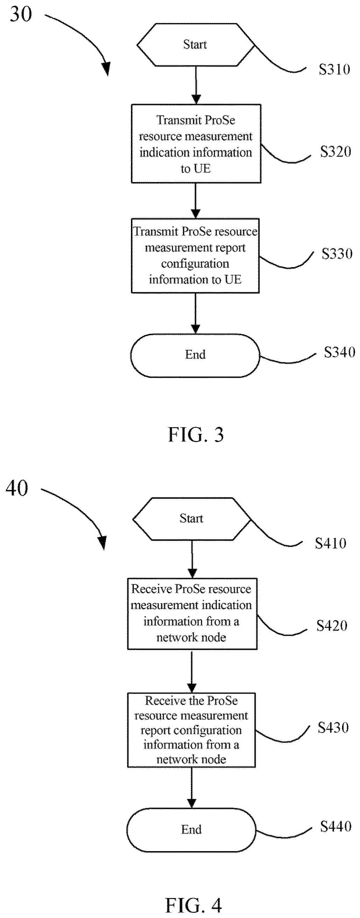

Fig. 3 is a flow diagram of a method executed by a network node according to the present invention. As shown in Fig. 3, the method starts from step S310.

At S320, the network node transmits ProSe resource measurement indication information to UE. The ProSe resource measurement indication information comprises information indicating the positions of the ProSe resources in a time-frequency domain and identity information of reference signals on the ProSe resources.

In an embodiment, the user equipment may receive a ProSe discovery signal or a ProSe communication signal in a corresponding time-frequency domain according to ProSe resource measurement indication information MeasSidelink-Config received from a network node. Then, the user equipment may descramble a demodulation reference signal according to the instruction of MeasSidelink-Config and then measure the RSRP value or the RSRQ value of the demodulation reference signal.

At S330, the network node transmits ProSe resource measurement report configuration information to the user equipment. In an embodiment, the ProSe resource measurement report configuration information comprises an event driving criterion triggering the user equipment to transmit a measurement report and content reported by the user equipment.

For example, the user equipment may trigger the measurement report according to the configuration information in a cell *ReportConfigSidelink* when the condition is satisfied. Wherein the configuration information *ReportConfigSidelink* comprises driving criteria for report triggering events S1-S7 and corresponding parameters such as thresholds, offsets and the like. The specific structure is as follows:

```
-- ASN1START

ReportConfigSidelink ::=                 SEQUENCE {
    triggerType                          CHOICE {
        event                                SEQUENCE {
            eventId                              CHOICE {
                eventS1                              SEQUENCE {
                    s1-Threshold-r13                     ThresholdSidelink
                },
                eventS2                              SEQUENCE {
                    s2-Threshold-r13                     ThresholdSidelink
                },
                eventS3                              SEQUENCE {
                    s3-Offset-r13                        INTEGER (-30..30),
                    reportOnLeave                        BOOLEAN
                },
                eventS4                              SEQUENCE {
                    s4-Threshold-r13                     ThresholdSidelink
                },
                eventS5-r13                          SEQUENCE {
                    s5-Threshold1-r13                    ThresholdSidelink,
                    s5-Threshold2-r13                    ThresholdSidelink
                },
                ....,
                eventS6-r13                          SEQUENCE {
                    s6-Offset-r13                        INTEGER (-30..30),
                    s6-ReportOnLeave-r13                 BOOLEAN
                },
                eventS7-r13                          SEQUENCE {
                    s7-Threshold1-r13                    ThresholdSidelink,
                    s7-Threshold2-r13                    ThresholdSidelink,
                }
            },
            Hysteresis                           Hysteresis,
            timeToTrigger                        TimeToTrigger
        },
        reportQuantity                       ENUMERATED {sameAsTriggerQuantity, both},
    maxReportCells                       INTEGER (1..maxCellReport),
    reportInterval                       ReportInterval,
    reportAmount                         ENUMERATED {r1, r2, r4, r8, r16, r32, r64, infinity},
    ....

    ThresholdSidelink ::=                Sidelink-RSRP-Range-r13
    Sidelink-RSRP-Range-r13 ::=          INTEGER (0..97)

-- ASN1STOP
```

In an embodiment, event S1 may be described as that serving Sidelink is better than a absolute threshold. In this case, the user equipment needs to:

1> consider that event S1 satisfies an entry condition when the condition S1-1 is satisfied;
1> consider that event S1 satisfies an exit condition when the condition S1-2 is satisfied;
1> take the frequency spectrum of a resource pool indicated in *measObjectSidelink* as serving sidelink;

Inequation S1-1(entry condition)

$$Msl - Hys > Thresh$$

Inequation S1-2(exit condition)

$$Msl+Hys<Thresh$$

wherein parameters in the formulas are defined as follows:
*Msl* is a measurement result of the serving sidelink, regardless of any offset; the unit is dBm when the measurement result is RSRP, and the unit is dB when the measurement result is RSRQ.

*Hys* is a lag parameter and is configured in IE *reportConfigSidelink*; the unit is dB.
*Thresh* refers to threshold and is configured in *sl-Threshold* in IE *reportConfigSidelink*; the unit is consistent with that *of Msl.*
In one embodiment, event S2 may be described as that the serving Sidelink is worse than an absolute threshold. In this case, the user equipment needs to:

1> consider that event S2 satisfies an entry condition when the condition S2-1 is satisfied;
1> consider that event S2 satisfies an exit condition when the condition S2-2 is satisfied;
1> take the frequency spectrum of a resource pool indicated in *measObjectSidelink* as serving sidelink;

Inequation S2-1(entry condition)

$$Msl+Hys<Thresh$$

Inequation S2-2(exit condition)

$$Msl-Hys>Thresh$$

wherein parameters in the formulas are defined as follows:
*Msl* is a measurement result of the serving sidelink, regardless of any offset; the unit is dBm when the measurement result is RSRP, and the unit is dB when the measurement result is RSRQ.

*Hys* is a lag parameter and is configured in IE *reportConfigSidelink*; the unit is dB.
*Thresh* refers to threshold and is configured in *sl-Threshold* in IE *reportConfigSidelink*; the unit is consistent with that of *Msl.*
In an embodiment, event S3 may be described as that a neighbor sidelink is better than an offset relative to a serving PCell/PSCell. In this case, the user equipment needs to:

1> consider that event S3 satisfies an entry condition when the condition S3-1 is satisfied;
1> consider that event S3 satisfies an exit condition when the condition S3-2 is satisfied;
1> take the frequency spectrum of a resource pool indicated in *measObjectSidelink* as neighbor sidelink;

Inequation S3-1(entry condition)

$$Mnsl+Ofn+Ocn-Hys>Mp+Ofp+Ocp+Off$$

Inequation S3-2(exit condition)

$$Mnsl+Ofn+Ocn+Hys<Mp+Ofp+Ocp+Off$$

wherein parameters in the formulas are defined as follows:
*Mnsl* is a measurement result of the neighbor sidelink, regardless of any offset; the unit is dBm when the measurement result is RSRP, and the unit is dB when the measurement result is RSRQ.

*Ofn* is a frequency offset on the frequency occupied by the neighbor sidelink, and is configured in IE *report-*

*ConfigSidelink*;

*Ocn* is an offset of a cell to which the neighbor sidelink belongs, and is configured in IE *reportConfigSidelink*;

*Mp* is a measurement result of PCell/PSCell, regardless of any offset; the unit is dBm when the measurement result is RSRP, and the unit is dB when the measurement result is RSRQ.

*Ofp* is a frequency offset on the frequency occupied by PCell/PSCell and is configured in IE *reportConfigEUTRA*;

*Ocp* is an offset of a cell to which PCell/PSCell belongs, and is configured in IE *reportConfigEUTRA*;

*Hys* is a lag parameter and is configured in IE *reportConfigSidelink*; the unit is dB.

*Off* is the offset parameter for this event and is configured in *s3-Offset* in IE *reportConfigSidelink*; the unit is consistent with that of *Mnsl*.

In an embodiment, event S4 may be described as that neighbor Sidelink is better than a absolute threshold. In this case, the user equipment needs to:

> 1> consider that event S4 satisfies an entry condition when the condition S4-1 is satisfied;
> 1> consider that event S4 satisfies an exit condition when the condition S4-2 is satisfied;
> 1> take the frequency spectrum of a resource pool indicated in *measObjectSidelink* as neighbor sidelink;

$$\text{Inequation S4-1(entry condition)}$$

$$Mnsl+Ofn+Ocn-Hys>Thresh$$

$$\text{Inequation S4-2(exit condition)}$$

$$Mnsl+Ofn+Ocn+Hys<Thresh$$

wherein parameters in the formulas are defined as follows:

*Mnsl* is a measurement result of the neighbor sidelink, regardless of any offset; the unit is dBm when the measurement result is RSRP, and the unit is dB when the measurement result is RSRQ.

*Ofn* is a frequency offset on the frequency occupied by the neighbor sidelink, and is configured in IE *reportConfigSidelink*;

*Ocn* is an offset of a cell to which the neighbor sidelink belongs, and is configured in IE *reportConfigSidelink*,

*Hys* is a lag parameter and is configured in IE *reportConfigSidelink*; the unit is dB.

*Thresh* refers to threshold and is configured in *s4-Threshold* in IE *reportConfigSidelink*; the unit is consistent with that of *Mnsl*.

In an embodiment, event S5 may be described as that serving PCell/PSCell is worse than a absolute threshold and neighbor sidelink is better than another absolute threshold. In this case, the user equipment needs to:

> 1> consider that event S5 satisfies entry conditions when the conditions S5-1 and S5-2 are satisfied;
> 1> consider that event S5 satisfies exit conditions when the conditions S5-3 and S5-4 are satisfied;
> 1> take the frequency spectrum of a resource pool indicated in *measObjectSidelink* as neighbor sidelink;

$$\text{Inequation S5-1(entry condition 1)}$$

$$Mp+Hys<Thresh1$$

$$\text{Inequation S5-2(entry condition 2)}$$

$$Mnsl+Ofn+Ocn-Hys>Thresh2$$

$$\text{Inequation S5-3(exit condition 1)}$$

$$Mp\ Hys>Thresh1$$

Inequation S5-4(exit condition 2)

$$Mnsl+Ofn+Ocn+Hys<Thresh2$$

wherein parameters in the formulas are defined as follows:

Thresh1 refers to threshold and is configured in *s5- Threshold1* in IE *reportConfigSidelink*; the unit is consistent with that of *Mp.*
Thresh2 refers to threshold and is configured in *s5-Threshold2* in IE *reportConfigSidelink*; the unit is consistent with that of *Mnsl.*

In an embodiment, event S6 may be described as that a neighbor sidelink is better than an offset relative to a SCell. In this case, the user equipment needs to:

1> consider that event S6 satisfies an entry condition when the condition S6-1 is satisfied;
1> consider that event S6 satisfies an exit condition when the condition S6-2 is satisfied;
1> take the frequency spectrum indicated in *measObjectEUTRA* as SCell;

Inequation S6-1(entry condition)

$$Mnsl+Ocn\text{-}Hys>Ms+Ocs+Off$$

Inequation S6-2(exit condition)

$$Mnsl+Ocn+Hys<Ms+Ocs+Off$$

wherein parameters in the formulas are defined as follows:
Ocs is an offset of a serving cell and is configured in IE *reportConfigEUTRA*;

In an embodiment, event S7 may be described as that serving sidelink is worse than a absolute threshold and neighbor sidelink is better than another absolute threshold. In this case, the user equipment needs to:

1> consider that event S7 satisfies entry conditions when the conditions S7-1 and S7-2 are satisfied;
1> consider that event S7 satisfies exit conditions when the conditions S7-3 and S7-4 are satisfied;
1> take the frequency spectrum of a resource pool indicated in *measObjectSidelink* as neighbor sidelink;

Inequation S7-1(entry condition 1)

$$Msl+Hys<Thresh1$$

Inequation S7-2(entry condition 2)

$$Mnsl+Ofn+Ocn\text{-}Hys>Thresh2$$

Inequation S7-3(exit condition 1)

$$Msl\,Hys>Thresh1$$

Inequation S7-4(exit condition 2)

$$Mnsl+Ofn+Ocn+Hys<Thresh2$$

EP 3 334 206 A1

In addition, in an embodiment, one bit in high layer signaling may be used to indicate whether to replace PCell/PSCell in measurement reporting events A1-A6 in cell ReportConfigEUTRA with Sidelink. Specifically, it is possible to use signaling useSidelink-r13 for indication. The structure of this cell is as follows:

```
-- ASN1START

ReportConfigEUTRA ::=                   SEQUENCE {
    triggerType                             CHOICE {
        event                               SEQUENCE {
            eventId                             CHOICE {
                eventA1                             SEQUENCE {
                    a1-Threshold                        ThresholdEUTRA
                },
                eventA2                             SEQUENCE {
                    a2-Threshold                        ThresholdEUTRA
                },
                eventA3                             SEQUENCE {
                    a3-Offset                           INTEGER (-30..30),
                    reportOnLeave                       BOOLEAN
                },
                eventA4                             SEQUENCE {
                    a4-Threshold                        ThresholdEUTRA
                },
                eventA5                             SEQUENCE {
                    a5-Threshold1                       ThresholdEUTRA,
                    a5-Threshold2                       ThresholdEUTRA
                },
                ...,
                eventA6-r10                         SEQUENCE {
                    a6-Offset-r10                       INTEGER (-30..30),
                    a6-ReportOnLeave-r10                BOOLEAN
                },
                eventC1-r12                         SEQUENCE {
                    c1-Threshold-r12                    ThresholdEUTRA-v1250,
                    c1-ReportOnLeave-r12                BOOLEAN
                },
                eventC2-r12                         SEQUENCE {
                    c2-RefCSI-RS-r12                    MeasCSI-RS-Id-r12,
                    c2-Offset-r12                       INTEGER (-30..30),
                    c2-ReportOnLeave-r12               BOOLEAN
                }
            },
            hysteresis                          Hysteresis,
            timeToTrigger                       TimeToTrigger
        },
        periodical                          SEQUENCE {
            purpose                             ENUMERATED {
                                                    reportStrongestCells, reportCGI}
        }
    },
    triggerQuantity                     ENUMERATED {rsrp, rsrq},
    reportQuantity                      ENUMERATED {sameAsTriggerQuantity, both},
    maxReportCells                      INTEGER (1..maxCellReport),
    reportInterval                      ReportInterval,
    reportAmount                        ENUMERATED {r1, r2, r4, r8, r16, r32, r64, infinity},
    ...,
    [[ si-RequestForHO-r9               ENUMERATED {setup}   OPTIONAL,  -- Cond reportCGI
       ue-RxTxTimeDiffPeriodical-r9     ENUMERATED {setup}   OPTIONAL   -- Need OR
    ]],
    [[ includeLocationInfo-r10          ENUMERATED {true}         OPTIONAL,  -- Need OR
       reportAddNeighMeas-r10           ENUMERATED {setup}   OPTIONAL   -- Need OR
    ]],
    [[ alternativeTimeToTrigger-r12     CHOICE {
           release                          NULL,
           setup                            TimeToTrigger
       }                                    OPTIONAL,  -- Need ON
       useT312-r12                      BOOLEAN       OPTIONAL,  -- Need ON
       usePSCell-r12                    BOOLEAN       OPTIONAL,  -- Need ON
       aN-Threshold1-v1250              RSRQ-RangeConfig-r12      OPTIONAL,  -- Need ON
       a5-Threshold2-v1250              RSRQ-RangeConfig-r12      OPTIONAL,  -- Need ON
       reportStrongestCSI-RSs-r12       BOOLEAN    OPTIONAL,  -- Need ON
       reportCRS-Meas-r12               BOOLEAN    OPTIONAL,  -- Need ON
       triggerQuantityCSI-RS-r12        BOOLEAN       OPTIONAL       -- Need ON
    ]],
    [[ useSidelink-r13                  BOOLEAN       OPTIONAL,  -- NEED ON
    ]]
}
```

In an embodiment, when the above conditions are satisfied to trigger a measurement event, the user equipment will transmit a measurement result to the network node, as shown in FIG. 2. The measurement result is included in the cell *meas Results.* Specifically, measurement results for ProSe radio resources refer to signaling *measResultSidelink-List-r13,* and the signaling comprises two parts, one is IDs of different Sidelink resource pools, and the other is a measurement result of each Sidelink resource pool. The specific structure is as follows.

```
MeasResults ::=                       SEQUENCE {
    measId                            MeasId,
    measResultPCell                   SEQUENCE {
        rsrpResult                        RSRP-Range,
        rsrqResult                        RSRQ-Range
    },
    measResultNeighCells              CHOICE {
        measResultListEUTRA               MeasResultListEUTRA,
        measResultListUTRA                MeasResultListUTRA,
        measResultListGERAN               MeasResultListGERAN,
        measResultsCDMA2000               MeasResultsCDMA2000,
        ...
    }                                                            OPTIONAL,
    ...,
    [[  measResultForECID-r9          MeasResultForECID-r9      OPTIONAL
    ]],
    [[  locationInfo-r10              LocationInfo-r10          OPTIONAL,
        measResultServFreqList-r10        MeasResultServFreqList-r10      OPTIONAL
    ]],
    [[  measId-v1250                  MeasId-v1250              OPTIONAL,
        measResultPCell-v1250         RSRQ-Range-v1250          OPTIONAL,
        measResultCSI-RS-List-r12     MeasResultCSI-RS-List-r12  OPTIONAL
    ]],
    [[  measResultSidelink-List-r13       MeasResultSidelink-List-r13    OPTIONAL
    ]]

    MeasResultSidelink-List-r13 ::= SEQUENCE (SIZE(1..maxCellReport)) OF MeasResultSidelink-r13

    MeasResultSidelink-r13 ::=  SEQUENCE {
    measSidelink-ID-r13               MeasSidelink-ID-r13,
    Sidelink-RSRP-Result-r13          RSRP-Rang
    }
}
```

Finally, the method 30 ends at step S340.

Fig. 4 is a flow diagram of a method executed by user equipment according to the present invention. As shown in Fig. 4, a method 40 starts from step S410.

At S420, the user equipment receives ProSe resource measurement indication information from a network node. The ProSe resource measurement indication information comprises information indicating the positions of the ProSe resources in a time-frequency domain and identity information of reference signals on the ProSe resources.

At S430, the user equipment receives ProSe resource report configuration information from the network node. Preferably, the ProSe resource measurement report configuration information comprises an event driving criterion triggering the user equipment to transmit a measurement report and content reported by the user equipment. The event driving criterion may include, but is not limited to, the driving criteria for events S1-S7 described above, therefore it will not be detailed herein again.

In an embodiment, the ProSe resource measurement report configuration information further comprises replacement indication information. The replacement indication information is used to indicate whether to replace PCell/PSCell in the event driving criterion with Sidelink. For example, one bit in high layer signaling may be used to indicate whether to replace PCell/PSCell in measurement reporting events A1-A6 in cell *ReportConfigEUTRA* with Sidelink. Specifically, it is possible to use signaling useSidelink-r13 for indication.

Finally, the method 40 ends at step S440.

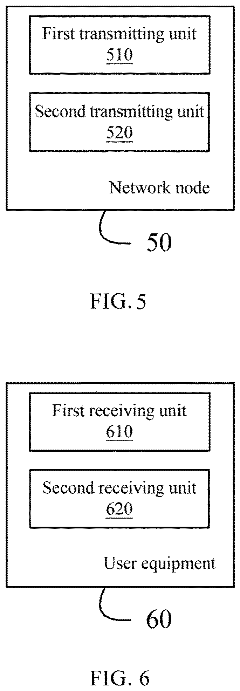

Fig. 5 shows a block diagram of a network node according to the present invention. As shown in Fig. 5, the network node 50 comprises a first transmitting unit 510 and a second transmitting unit 520.

The first transmitting unit 510 is configured to transmit ProSe resource measurement indication information to UE. The ProSe resource measurement indication information comprises information indicating the positions of the ProSe resources in a time-frequency domain and identity information of reference signals on the ProSe resources.

The second transmitting unit 520 is configured to transmit ProSe resource measurement report configuration information to UE. Preferably, the ProSe resource measurement report configuration information comprises an event driving criterion triggering the user equipment to transmit a measurement report and content reported by the user equipment. The event driving criterion may include, but is not limited to, the driving criteria for events S1-S7 described above, therefore it will not be detailed herein again.

In an embodiment, the ProSe resource measurement report configuration information further comprises replacement indication information. The replacement indication information is used to indicate whether to replace PCell/PSCell in the event driving criterion with Sidelink. For example, one bit in high layer signaling may be used to indicate whether to replace PCell/PSCell in measurement reporting events A1-A6 in cell *ReportConfigEUTRA* with Sidelink. Specifically, it is possible to use signaling useSidelink-r13 for indication.

Fig. 6 is a block diagram of user equipment according to the present invention. As shown in Fig. 6, the user equipment 60 comprises a first receiving unit 610 and a second receiving unit 620.

The first receiving unit 610 is configured to receive ProSe resource measurement indication information from a network node. The ProSe resource measurement indication information comprises information indicating the positions of the ProSe resources in a time-frequency domain and identity information of reference signals on the ProSe resources.

The second receiving unit 620 is configured to receive ProSe resource measurement report configuration information from the network node. Preferably, the ProSe resource measurement report configuration information comprises an event driving criterion triggering the user equipment to transmit a measurement report and content reported by the user equipment. The event driving criterion may include, but is not limited to, the driving criteria for events S1-S7 described above, therefore it will not be detailed herein again.

In an embodiment, the ProSe resource measurement report configuration information further comprises replacement indication information. The replacement indication information is used to indicate whether to replace PCell/PSCell in the event driving criterion with Sidelink. For example, one bit in high layer signaling may be used to indicate whether to replace PCell/PSCell in measurement reporting events A1-A6 in cell *ReportConfigEUTRA* with Sidelink. Specifically, it is possible to use signaling useSidelink-r13 for indication.

The methods and related equipment according to the present invention have been described above in conjunction with preferred embodiments. It should be understood by a person skilled in the art that the methods described above are only exemplary. The method of the present invention is not limited to steps or sequences illustrated above. The network node and user equipment illustrated above may also include more modules, for example, may further include modules which can be developed or will be developed in future to be applied to a base station, an MME or UE. Various identities shown above are only exemplary, not for limitation and the present invention is not limited to specific information elements serving as examples of these identities. A person skilled in the art would be taught by the illustrated embodiments to make many alterations and modifications.

It should be understood that the above embodiments of the present invention may be implemented through software, hardware or combination of software and hardware. For example, various components of the base station and user equipment in the above embodiments can be realized through a plurality of devices, and these devices include, but are not limited to: an analog circuit device, a digital circuit device, a digital signal processing (DSP) circuit, a programmable processor, an application specific integrated circuit (ASIC), a field programmable gate array (FPGA), and a complex programmable logic device (CPLD), and the like.

In this application, the "base station" refers to a mobile communication data and control switching center with large transmission power and wide coverage area, including resource allocation scheduling, data receiving and transmitting functions. The "user equipment" refers to a user mobile terminal, such as a terminal device that can perform wireless communication with a base station or a micro base station, including a mobile phone, a notebook, or the like.

In addition, the embodiments of the present invention, disclosed herein, may be implemented on a computer program product. More specifically, the computer program product is a product described as below. The product has a computer-readable medium on which a computer program logic is encoded. The computer program logic provides relevant operations to implement the above-described technical solution of the present invention when the product is executed on a computing device. The computer program logic enables a processor to execute the operations (methods) described in the embodiments of the present invention when the product is executed on at least one processor of a computing system. Such an arrangement of the present invention is typically provided as software, a code, and/or other data structures that are configured or encoded on a computer-readable medium, such as an optical medium (e.g., a CD-ROM), a floppy disk or a hard disk, or, for example, firmware or other media of microcodes on one or more ROM or RAM or PROM chips, or downloadable software images, shared database and the like in one or more modules. Software or firmware or such configuration may be installed on a computing device such that one or more processors in the computing device perform the technical solutions described in the embodiments of the present invention.

Although the present invention has been shown in connection with the preferred embodiments of the present invention, it will be understood by those skilled in the art that various modifications, substitutions and alterations may be made therein without departing from the spirit and scope of the present invention. Accordingly, the present invention should not be defined by the above-described embodiments, but should be defined by the appended claims and their equivalents.

**Claims**

1. A method executed by a network node, comprising:

   transmitting ProSe resource measurement indication information to user equipment, wherein the ProSe resource measurement indication information comprises information indicating the positions of ProSe resources in a time-frequency domain and identity information of reference signals on the ProSe resources; and
   transmitting ProSe resource measurement report configuration information to the user equipment.

2. The method according to claim 1, wherein the ProSe resource measurement report configuration information comprises an event driving criterion triggering the user equipment to transmit a measurement report and content reported by the user equipment.

3. The method according to claim 2, wherein the ProSe resource measurement report configuration information further comprises replacement indication information, used to indicate whether to replace a PCell/PSCell in the event driving criterion with a Sidelink.

4. The method according to claim 2, wherein the event driving criterion comprises:
   triggering the user equipment to transmit a measurement report when a serving Sidelink is greater than an absolute threshold.

5. The method according to claim 2, wherein the event driving criterion comprises:
   triggering the user equipment to transmit a measurement report when a serving Sidelink is less than an absolute threshold.

6. The method according to claim 2, wherein the event driving criterion comprises:
   triggering the user equipment to transmit a measurement report when a neighbor Sidelink is greater than the offset of a serving PCell/PSCell.

7. The method according to claim 2, wherein the event driving criterion comprises:
   triggering the user equipment to transmit a measurement report when a neighbor Sidelink is greater than an absolute threshold.

8. The method according to claim 2, wherein the event driving criterion comprises:
   triggering the user equipment to transmit a measurement report when a serving PCell/PSCell is less than an absolute threshold and a neighbor Sidelink is greater than another absolute threshold.

9. The method according to claim 2, wherein the event driving criterion comprises:
   triggering the user equipment to transmit a measurement report when a neighbor Sidelink is greater than the offset of a SCell.

10. The method according to claim 2, wherein the event driving criterion comprises:
    triggering the user equipment to transmit a measurement report when a serving Sidelink is less than an absolute threshold and a neighbor Sidelink is greater than another absolute threshold.

11. A network node, comprising:

    a first transmitting unit, configured to transmit ProSe resource measurement indication information to user equipment, wherein the ProSe resource measurement indication information comprises information indicating the positions of ProSe resources in a time-frequency domain and identity information of reference signals on the ProSe resources; and
    the second transmitting unit, configured to transmit ProSe resource measurement report configuration information to the user equipment.

12. The network node according to claim 11, wherein the ProSe resource measurement report configuration information comprises an event driving criterion triggering the user equipment to transmit a measurement report and content reported by the user equipment.

13. The network node according to claim 12, wherein the ProSe resource measurement report configuration information further comprises replacement indication information, used to indicate whether to replace a PCell/PSCell in the event driving criterion with a Sidelink.

14. The network node according to claim 12, wherein the event driving criterion comprises:
triggering the user equipment to transmit a measurement report when a serving Sidelink is greater than an absolute threshold.

15. The network node according to claim 12, wherein the event driving criterion comprises:
triggering the user equipment to transmit a measurement report when a serving Sidelink is less than an absolute threshold.

16. The network node according to claim 12, wherein the event driving criterion comprises:
triggering the user equipment to transmit a measurement report when a neighbor Sidelink is greater than the offset of a serving PCell/PSCell.

17. The network node according to claim 12, wherein the event driving criterion comprises:
triggering the user equipment to transmit a measurement report when a neighbor Sidelink is greater than an absolute threshold.

18. The network according to claim 12, wherein the event driving criterion comprises:
triggering the user equipment to transmit a measurement report when a serving PCell/PSCell is less than an absolute threshold and a neighbor Sidelink is greater than another absolute threshold.

19. The network node according to claim 12, wherein the event driving criterion comprises:
triggering the user equipment to transmit a measurement report when a neighbor Sidelink is greater than the offset of a SCell.

20. The network according to claim 12, wherein the event driving criterion comprises:
triggering the user equipment to transmit a measurement report when a serving Sidelink is less than an absolute threshold and a neighbor Sidelink is greater than another absolute threshold.

21. A method executed by user equipment, comprising:

receiving ProSe resource measurement indication information from a network node, wherein the ProSe resource measurement indication information comprises information indicating the positions of ProSe resources in a time-frequency domain and identity information of reference signals on the ProSe resources; and
receiving the ProSe resource measurement report configuration information from a network node.

22. The method according to claim 21, wherein the ProSe resource measurement report configuration information comprises an event driving criterion triggering the user equipment to transmit a measurement report and content reported by the user equipment.

23. The method according to claim 22, wherein the ProSe resource measurement report configuration information further comprises replacement indication information, used to indicate whether to replace a PCell/PSCell in the event driving criterion with a Sidelink.

24. User equipment, comprising:

a first receiving unit, configured to receive ProSe resource measurement indication information from a network node, wherein the ProSe resource measurement indication information comprises information indicating the positions of ProSe resources in a time-frequency domain and identity information of reference signals on the ProSe resources; and
a second receiving unit, configured to receive ProSe resource measurement report configuration information from the network node.

25. The user equipment according to claim 24, wherein the ProSe resource measurement report configuration information comprises an event driving criterion triggering the user equipment to transmit a measurement report and content reported by the user equipment.

26. The user equipment according to claim 25, wherein the ProSe resource measurement report configuration information further comprises replacement indication information, used to indicate whether to replace a PCell/PSCell in the event driving criterion with a Sidelink.

| Network node 10 |
| --- |

| UE 20 |
| --- |

| S201: Transmit ProSe resource measurement indication information to UE |
| --- |

| S202: Receive the ProSe resource measurement indication information |
| --- |

| S203: Apply the received indication information |
| --- |

FIG. 1

| User |
| --- |

| Network node |
| --- |

Measurement report

FIG. 2

30

Start — S310

Transmit ProSe
resource measurement
indication information
to UE — S320

Transmit ProSe resource
measurement report
configuration
information to UE — S330

End — S340

FIG. 3

40

Start — S410

Receive ProSe resource
measurement indication
information from a
network node — S420

Receive the ProSe
resource measurement
report configuration
information from a
network node — S430

End — S440

FIG. 4

First transmitting unit
510

Second transmitting unit
520

Network node

50

FIG. 5

First receiving unit
610

Second receiving unit
620

User equipment

60

FIG. 6

# INTERNATIONAL SEARCH REPORT

| International application No. |
| --- |
| **PCT/CN2016/093422** |

**A. CLASSIFICATION OF SUBJECT MATTER**

H04W 24/10 (2009.01) i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC: Prose, short distance, proximity, service, D2D, equivalent, time domain, frequency domain, report, ID, proximity based service, device to device, handoff, handover, reselect, measure, resource, time, frequency, domain, reference signal, identification

**C. DOCUMENTS CONSIDERED TO BE RELEVANT**

| Category* | Citation of document, with indication, where appropriate, of the relevant passages | Relevant to claim No. |
| --- | --- | --- |
| X | CN 104144437 A (ZTE CORP.), 12 November 2014 (12.11.2014), claims 1-20, and description, paragraphs 0063-0079 | 1-26 |
| A | CN 102547881 A (ZTE CORP.), 04 July 2012 (04.07.2012), the whole document | 1-26 |
| A | CN 104185299 A (HUAWEI DEVICE CO., LTD.), 03 December 2014 (03.12.2014), the whole document | 1-26 |
| A | WO 2015100550 A1 (NOKIA TECHNOLOGIES OY et al.), 09 July 2015 (09.07.2015), the whole document | 1-26 |

☐ Further documents are listed in the continuation of Box C.      ☒ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 11 October 2016 (11.10.2016) | **27 October 2016 (27.10.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **JIN, Jing** Telephone No.: (86-10) **62413414** |
| --- | --- |

Form PCT/ISA/210 (second sheet) (July 2009)

## INTERNATIONAL SEARCH REPORT
### Information on patent family members

| | International application No. |
|---|---|
| | **PCT/CN2016/093422** |

| Patent Documents referred in the Report | Publication Date | Patent Family | Publication Date |
|---|---|---|---|
| CN 104144437 A | 12 November 2014 | WO 2014180283 A1 | 13 November 2014 |
| | | US 2016100355 A1 | 07 April 2016 |
| CN 102547881 A | 04 July 2012 | WO 2013107361 A1 | 25 July 2013 |
| CN 104185299 A | 03 December 2014 | WO 2014187289 A1 | 27 November 2014 |
| WO 2015100550 A1 | 09 July 2015 | US 2016278152 A1 | 22 September 2016 |

Form PCT/ISA/210 (patent family annex) (July 2009)